# EUROPEAN PATENT APPLICATION

(11) **EP 0 924 635 A2**
(43) Date of publication of application: **23.06.1999**
(21) Application number: 98310249.2
(22) Date of filing: 14.12.1998
(51) Int. Cl.: G06K 7/00, G06K 7/10, G06K 7/08

(54) **Electronic indentification system including a reader and a plurality of transponders**

(30) Priority: 15.12.1997 ZA 9711244
(71) Applicant: Data Investments Limited, Road Town, Tortola (VG)
(72) Inventor: Turner, Chirstopher Gordon Gervase, Gauteng (ZA); Kruger, Johan Dawid, Gauteng (ZA)
(74) Representative: Abnett, Richard Charles

(57) **Abstract**

A method of reading a transponder population including a plurality of electronic transponders (10.1 to 10.10) includes the steps of energizing the transponders with an energizing signal and causing all the transponders to reply to the energizing signal with respective identification code data. A reader (100) reads the respective identification code data originating from one transponder of the plurality of transponders at a time. Immediately after a transponder of the plurality of transponders has been read, an acknowledgement signal is transmitted from the reader setting a resetable flag (20) in the transponder for an indefinite period. The set flag is utilized to inhibit the transponder from responding to the energizing signal, as long as the flag is set and to cause the transponder to wait for and to react to a reset signal to reset the flag and to revert to an active mode wherein it automatically responds to the energizing signal. A transponder (10), command decoder (26) and an electronic RF identification system (110) are also disclosed and claimed.

## Description

This invention relates to electronic identification systems and more particularly to an electronic identification system including a reader and a plurality of transponders.

Identification systems including a reader or interrogator and a plurality of transponders are known in the art. The transponders in these systems utilize energy in an energizing signal transmitted by the reader or interrogator to charge respective local virtual batteries including charge storage capacitors, to power electronic circuits of the transponder. In one family of such systems, the transponders when initially powered-up as aforesaid, are in an active mode, so that they all automatically respond by modulating the energizing signal by backscatter modulation with data prestored in the respective transponders. The data is modulated by each transponder in frames separated by an inter-frame interval and at a rate determined by a frequency of a clock on the transponder. The reader locks onto the clock frequency of one transponder, reads the data and transmits an acknowledgement signal. The acknowledgement signal is utilized by the transponder just read to switch it to a sleep mode wherein it is inhibited from responding to the energizing signal, even while still being energized. The interrogator then locks onto the clock frequency of a next transponder in the energizing radiation pattern and the aforementioned procedure is repeated for that transponder, so that it is also read and switched to the sleep mode.

The duration of the sleep mode is in some cases determined by an internal reset timer of the transponder. In other cases, it may be indeterminate in that it is dependent on a discharge time of the charge storage capacitor on the transponder. When the capacitor is discharged, the transponder automatically resets to the active mode. Thus, while the transponder is still energized and in the sleep mode, it cannot be woken up again, until the term of the sleep mode has expired. When the energization is removed and the aforementioned capacitor has discharged (typically 10 - 20 seconds after the energizing field has been removed) the transponder automatically resets to the aforementioned active mode. This is not satisfactory in many applications.

For example, and mainly due to the charge storage limitation imposed by the size of a capacitor on a transponder which is embodied in the form of an integrated circuit, it is not possible practically to support a so-called electronic article surveillance procedure with the aforementioned system. As stated hereinbefore, after removal of the energizing field from the transponder, sufficient charge to power the transponder will remain on the capacitor for 10 to 20 seconds only, after which the transponder automatically resets to the active mode. For most electronic article surveillance procedures (for example those applied at an exit of a store or shop), the transponder needs to be kept in the sleep mode for a number of minutes at least, typically for one to three hours.

In other electronic identification systems which work according to entirely different protocols, there is required a collision management system to reduce collisions between data transmitted by the transponders, which are all transmitting simultaneously. These collisions lead to corruption of the data and a resulting slower reading speed. In United States Patent US-A-5,673,037 there is disclosed what is essentially a collision management system for identification systems of the latter kind. According to the invention in US 5,673,037, the transponders or tags when initially powered up, default to a ready mode wherein they do not respond while being energized. To facilitate faster reading of a transponder population, the interrogator is able to transmit a data stream to the population to select a predetermined sub-set of the population in the energizing radiation pattern and to switch them to a selected mode. Only the sub-set of transponders in this mode then responds to interrogation signals from the interrogator. The interrogator reads these transponders one by one and they are identified by their unique identification numbers. The sub-set as a whole once ready can similarly be unselected and another sub-set can then similarly be selected.

It is an object of the present invention to provide an alternative transponder, an electronic identification system and a method of reading transponders of the first family with which the applicant believes the problems associated with the first family may be alleviated.

### SUMMARY OF THE INVENTION

According to the invention there is provided a method of reading a transponder population including a plurality of electronic transponders, the method including the steps of:
- energizing the transponders with an energizing signal;
- causing all the transponders to reply to the energizing signal with respective identification code data;
- reading by means of a reader the respective identification code data originating from one transponder of the plurality of transponders at a time;
- immediately after a transponder of the plurality of transponders has been read, transmitting an acknowledgement signal from the reader setting a resetable flag in the transponder for an indefinite period;
- utilizing the set flag to inhibit the transponder from responding to the energizing signal, as long as the flag is set; and
- causing the transponder in response to a reset signal, to reset the flag and to revert to an active mode wherein it automatically responds to the energizing signal.

The energizing signal may be in the form of a high frequency carrier and the acknowledgement signal may be in the form of a pulse, amplitude modulated on the carrier.

The reset signal may also be amplitude modulated on the carrier.

The method may also include the steps of causing the transponders to utilize respective command decoders to decode command signals which are to decode command signals which are amplitude modulated on the energizing signal; and to utilizing the decoded signals to select a selectable parameter of transponder operation.

The invention also provides an electronic transponder for an electronic identification system also including a reader for reading the transponder, the transponder including:
- control circuitry having first and second modes of operation;
- the first mode being an active mode wherein the transponder automatically responds with identification code data when energized;
- the second mode being a sleep mode wherein the transponder is inhibited from responding when energized;
- a resetable flag connected to mode selection signal detection circuitry;
- the mode selection signal detection circuitry being responsive to an acknowledgement signal from a reader after the transponder has been read to set the flag, thereby to cause the control circuitry to enter the sleep mode; and to a reset signal to reset the flag, thereby to cause the control circuitry to enter the active mode.

The resetable flag preferably includes a bistable, non-volatile memory cell.

The mode selection detection circuitry may include a reset signal detector including a low pass filter for filtering out the reset signal which is amplitude modulated on the energizing signal.

The reset signal detector may further include an amplitude demodulator connected to an input of the low pass filter.

The demodulator may include an envelope detector and the low pass filter may include an integrator.

An output of the integrator may be connected to a rectifier, to yield a rectified signal having an amplitude which is proportional to an amplitude of a signal at an output of the integrator; and the output of the rectifier may be connected to a comparator circuit, for providing an output signal to reset the flag, if the amplitude of the rectified signal is in a predetermined relation to a first reference signal supplied to the comparator.

The integrator may have a transfer function with a negative slope of amplitude against increasing frequency; and the comparator may be configured to provide a second output signal in response to a second input signal having a frequency falling on the slope, if the output signal at the output of the rectifier derived from the second input signal is in a predetermined relation to a second reference signal.

The invention further provides an electronic identification system including:
- a reader;
- a plurality of electronic transponders;
- each transponder including control circuitry having first and second modes of operation;
- the first mode being an active mode wherein the transponder responds with identification code data when energized by the reader,
- the second mode being a sleep mode wherein the transponder is inhibited from responding when energized;
- the reader including transmitter means to transmit an acknowledgement signal immediately after a transponder has been read;
- each transponder including respective mode selection signal detection circuitry and a respective resetable flag connected to the mode selection signal detection circuitry;
- the detection circuitry being responsive to the acknowledgement signal to set the flag and to cause the control circuitry to enter the sleep mode; and
- the detection circuitry further being responsive to a reset signal to reset the flag to cause the control circuitry to enter the active mode.

The acknowledgement signal may be in the form of a pulse, which is amplitude modulated on the energizing signal.

The transmitter of the reader preferably amplitude modulates the reset signal on the energizing signal and the frequency of the reset signal is preferably at least an order lower than the frequency components of the acknowledgement signal and of the energizing signal.

The present invention also provides transponder command signal detection circuitry including:
- an integrator having a negative slope of output amplitude with respect to increasing input frequency, so that the amplitude of an output signal is inversely proportional to the frequency thereof;
- rectifier means connected to an output of the integrator to provide a rectified signal having an amplitude proportional to the amplitude of the output signal;
- comparator means connected to the rectifier means to provide a command signal if the amplitude of the rectified signal is in a predetermined relation to a reference signal;
- a resetable flag operable by the command signal; and
- the resetable flag being configured to control an operational parameter of the transponder.

### BRIEF DESCRIPTION OF THE DRAWINGS

The invention will now further be described, by way of example only, with reference to the accompanying drawings, wherein:
- Figure 1: is a block diagram of a transponder embodying the invention;
- Figure 2: is a block diagram of a command decoder embodying the invention forming part of mode selection signal detection circuitry of the transponder;
- Figure 3: is a representation of a transfer function of an integrator forming part of the command decoder;
- Figure 4: is another representation of the command decoder with diagrammatic wave form representations of a reset signal received, as it is processed by the various circuits in the decoder to detect the reset signal;

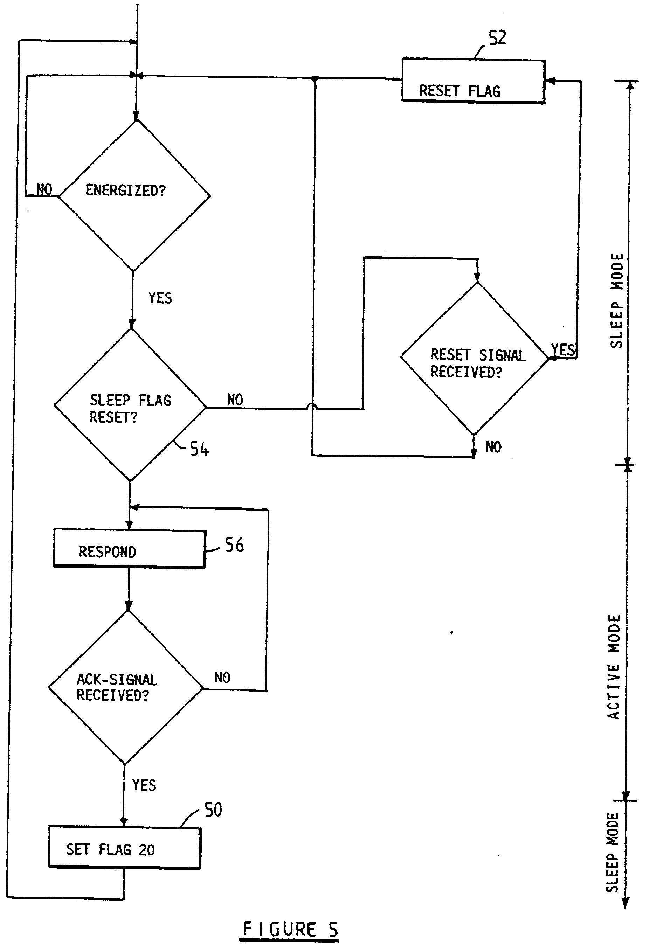

- Figure 5: is a diagram illustrating operation of the transponder and method embodying the invention;
- Figure 6: is a basic block diagram of a reader forming part of the electronic identification system embodying the invention and a diagrammatic representation of radiation patterns of the reader;
- Figure 7: is another basic block diagram of a transponder forming part of the aforementioned electronic identification system embodying the invention;
- Figure 8: is a representation of an energizing signal and an acknowledgement signal transmitted by the reader of the identification system; and
- Figure 9: is a representation of repeated response signals from a transponder, arranged in frames.

### DESCRIPTION OF A PREFERRED EMBODIMENT OF THE INVENTION

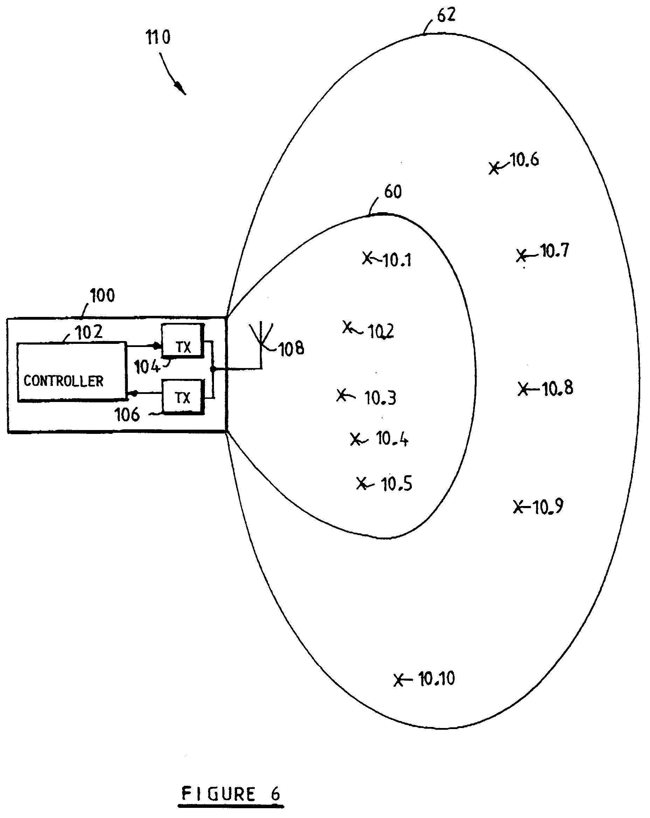

The illustrated embodiment of the invention relates to an electronic identification system 110 including a reader 100 shown in Figure 6 and a transponder population including a plurality of transponders 10.1 to 10.10. The embodiment more particularly relates to the first family of identification systems described in the introduction to this specification.

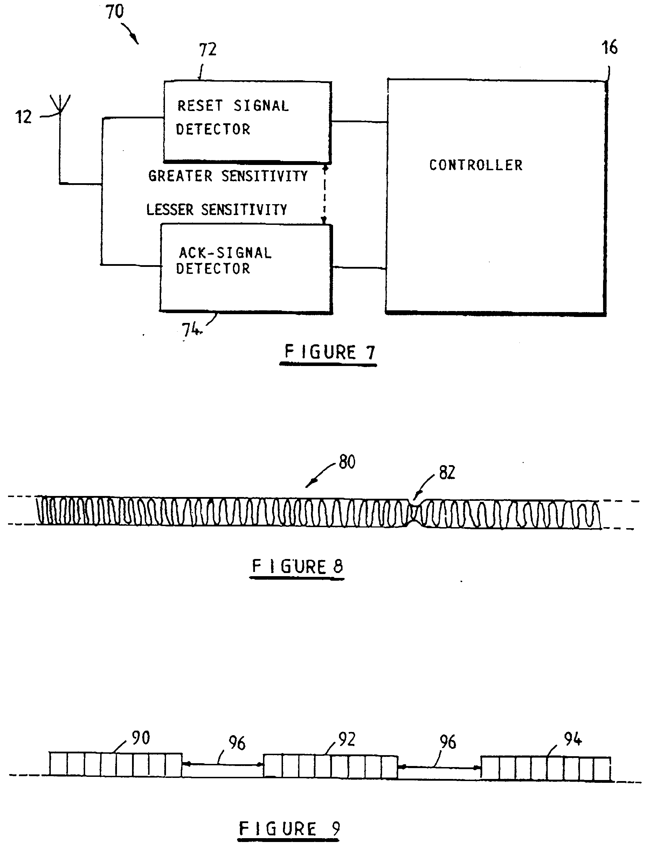

As shown in Figure 6, the reader 100 includes a controller 102, a radio frequency transmitter 104 for transmitting an energizing signal 80 in the form of a high frequency carrier (shown in Figure 8) to the transponder population; and a receiver 106 for receiving response signals (shown in Figure 9) from the transponders. The transmitter and receiver are connected in known manner to an antenna 108.

In use, a high frequency carrier/energizing signal 80 (10KHz to 2.5 GHz) is utilized by the reader. The acknowledgement signal 82, a reset signal 37 and other command signals are amplitude modulated on the carrier. The frequency components of the carrier and acknowledgement signals are at least one order higher than the frequency components of the reset signal and other command or programming signals.

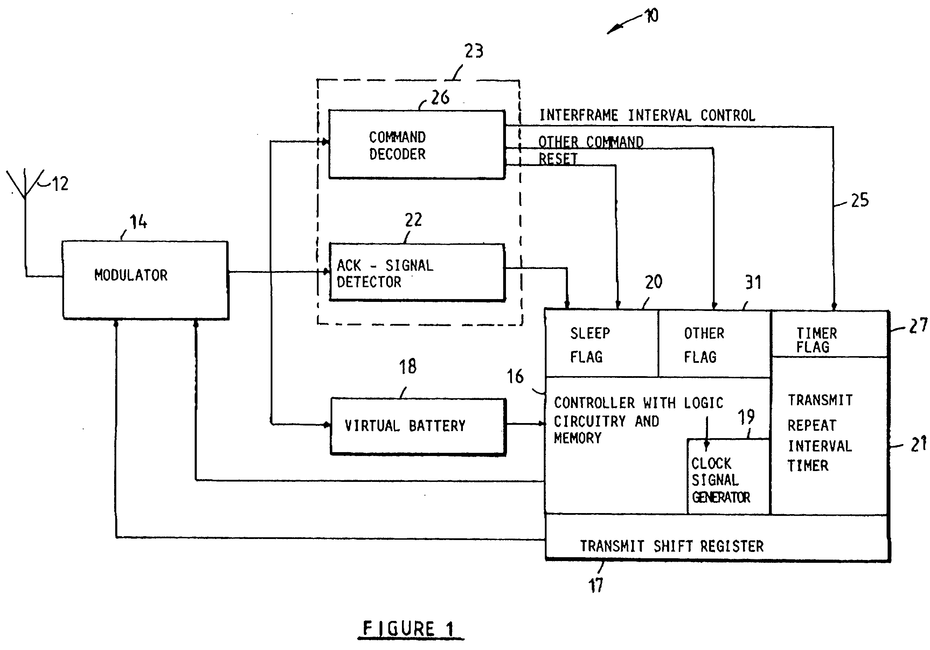

As shown in Figure 1, each transponder 10 includes an antenna 12 and a modulator 14 which is controlled by logic circuitry 16 to backscatter modulate the energizing signal 80 received from a reader 100, to transmit response data stored in a transmit shift register 17 back to the reader. The logic circuitry includes a clock signal generator 19 and means 21 for arranging the response data in discrete frames 90 to 94, shown in Figure 9. The clock frequency determines the data rate in the response. The interframe interval 96 (see Figure 9) may be selectable as hereinafter described. A virtual battery 18 including a capacitor (also not shown) serves to collect power from the energizing signal 80 and to power the circuitry of the transponder 10. The transponder 10 further includes a non-volatile resetable sleep flag 20 in the form of a bistable memory cell, which when set, causes the transponder not to respond to the energizing signal as aforesaid.

The flag 20 is set by an acknowledgement signal 82. The acknowledgement signal is in the form of a precisely timed pulse, amplitude modulated by the reader 100 on the carrier 80 and which signal is received via antenna 12 of the transponder and detected by a detector circuit 22 forming part of mode selection signal detection circuitry 23 of the transponder. The acknowledgement signal 82 is transmitted by the reader 100 immediately after a transponder of the population has been read, indicating to the transponder just read that the responding signal has been received by the reader and the data (including identity data) stored in the transponder has been read. The acknowledgement signal is timed such in respect of the response signal 92 of the transponder received, that that transponder is able to determine that it has been addressed by the reader. This technology is well known for systems of the aforementioned first family. Thus, if the acknowledgement signal is intended for transponder 10 and received thereby, the flag 20 of that transponder is set, to cause that transponder to enter a sleep mode wherein it is inhibited as aforesaid in that the signal of the clock signal generator 19 is inhibited. The transponder remains in the sleep mode for as long as the flag is set, whether the transponder is energized or not. The reader 100 then locks onto the clock frequency of a next transponder in the population in the energizing signal radiation pattern, reads the data of that transponder and causes it to enter the sleep mode as hereinbefore described. This procedure is repeated for the balance of the transponders in the transponder population, one after the other, until all of the transponders have been read.

The aforementioned flag is normally set indefinitely and can only be reset by a reset signal as hereinafter described. However, in some applications, the transponder may further include a reset timer (not shown) which is connected to reset the flag 20, a predetermined time after it has been set. The predetermined time may be programmable to be relatively long such as 10 to 300 minutes, or relatively short, such as 3 to 5 seconds.

The mode selection signal detection circuitry 23 further includes command decoder circuitry 26 for detecting and identifying *inter alia* a reset signal 37 transmitted by the reader 100. The reset signal 37 is also amplitude modulated on the carrier 80. This circuitry 26 enables a user to reset the flag 20 of the transponder at any time while it is set, by transmitting a reset signal 37 utilizing the reader. Thus, at the start or commencement of a reading procedure of a transponder population (some transponders of which may be set and others reset), the reset signal is transmitted to reset all the transponders, thereby to enable the reader to read all of them.

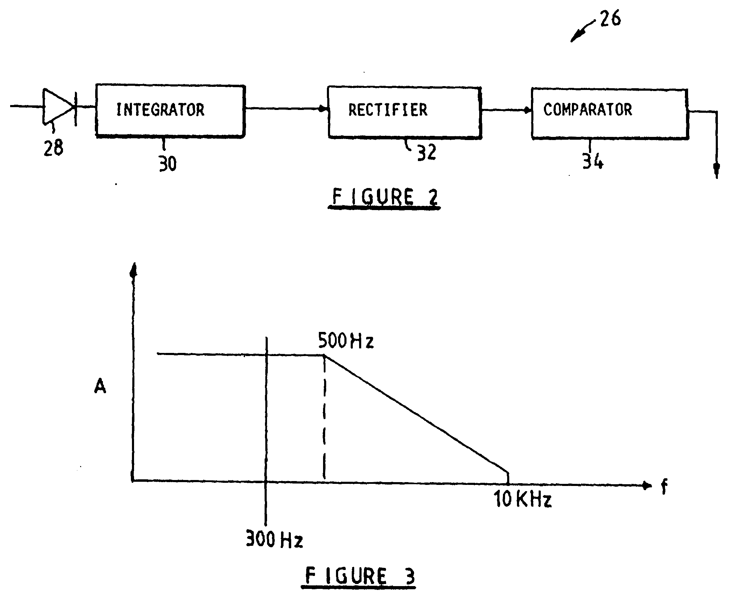

Referring to Figure 2, the command decoder circuitry 26 includes an envelope detector or AM demodulator 28, an integrator 30, a rectifier 32 and a comparator 34. A representation of the transfer function of the integrator 30 is shown in Figure 3. It will be seen that it transmits frequencies smaller than 500Hz and that frequencies larger than 500Hz are attenuated by its 6dB/octave slope. Thus, the energizing signal 80 and acknowledgement signal 82 are attenuated by the integrator, but the reset signal is transmitted to the rectifier 32.

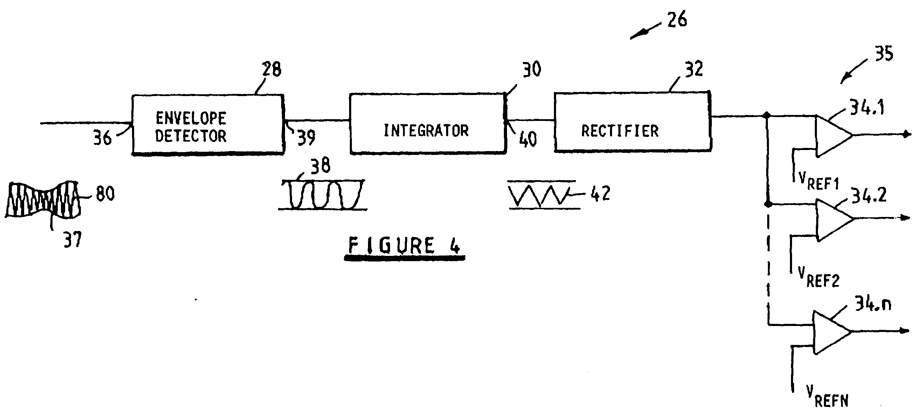

In Figure 4, there is shown another representation of the command decoder circuitry 26 together with schematic waveforms of the reset signal 37 as it is processed by the detection circuitry. At the input 36 of the envelope detector there is shown the carrier 80 which is amplitude modulated with the 300 Hz reset signal 37. At the output of the envelope detector 39, there is shown the demodulated reset signal 38. At the output 40 of the integrator 30, there is shown the processed reset signal 42. The rectifier 32 rectifies the processed signal to yield a DC voltage, proportional to the amplitude of the processed signal. The reset signal 37 is identified and distinguished from other command signals that may originate from the reader 100 by its DC level and reset signal detection circuitry 35 including comparator 34. 1 and a suitable reference voltage signal V_{REF1}. When the low frequency reset signal 37 is received by any transponder in the radiation pattern of the reader 100, the flag 20 of that transponder is reset. The clock signal is enabled again and the transponder enters the active mode.

With the reader 100 utilizing other transponder programming or command signals with different frequencies which fall on the slope of the integrator 30, the resulting differences in amplitude may be used to discriminate between the different programming signals by means of the rectifier 32 and the comparators 34.2 to 34.n, having suitable reference signals to discriminate between the signals. Such command signals may include signals to select the interframe interval 96. In Figure 9 there is shown a diagrammatic representation of response signal frames 90, 92 and 94 with random interframe intervals 96. Referring to Figure 1, an interframe interval control signal 25 transmitted and detected as hereinbefore described, is used to manipulate a bistable timer flag 27. The timer flag 27 controls the random interframe interval 96 to be either generally long or generally short, depending on the selection made by an operator of the reader. In a similar manner the other command signal 29 may be utilized to manipulate another bistable flag 31, to control another manipulatable function or parameter of operation of the transponder.

In Figure 6, there is shown a typical flow diagram of the operation of a transponder 10. The diagram is self-explanatory and illustrates the step of setting flag 20 at block 50, after an acknowledgement signal 82 has been received from the reader 100. The transponder then enters the sleep mode as hereinbefore described. The transponder remains in this mode until the flag 20 is reset at 52. When the flag has been reset, it enters the active mode at 54. In the aforementioned active mode, the transponder automatically responds with the response data (as shown at block 56) while being energized. When it enters the sleep mode, it no longer responds to the energizing signal, even if energized.

With an electronic identification system including a reader and a plurality of transponders of the aforementioned kind, reliability could further be improved by ensuring that the signal level required to reset the flag 20 is substantially lower than the required signal level of the acknowledge signal, to set the flag. This ensures that transponders can be reset at a greater distance from the reader 100 than the distance over which the transponders can be read. This increases the probability that all transponders in the energizing radiation pattern have been reset to their active modes.

One way of achieving this objective is illustrated in Figure 6 where the radiation pattern 60 of the reader 100 for the energizing signal 80 and the acknowledgement signal 82 is smaller in extent than the pattern 62 for the reset signal 37. This ensures that all the transponders in pattern 62 can be reset, even if the reader 100 cannot read transponders 10.6 to 10.10.

Alternatively and as shown in Figure 7, the sensitivity of the reset signal detection circuitry 72 of the transponder 70 is arranged to be bigger than that of the circuitry 74 for processing the acknowledgement signals.

It will be appreciated that there are many variations in detail on the method, identification system, transponder and the reset signal detection circuitry according to the invention without departing from the scope of the appended claims.

## Claims

1. A method of reading a transponder population including a plurality of electronic transponders, the method including the steps of:
- energizing the transponders with an energizing signal;
- causing all the transponders to reply to the energizing signal with respective identification code data;
- reading by means of a reader the respective identification code data originating from one transponder of the plurality of transponders at a time;
- immediately after a transponder of the plurality of transponders has been read, transmitting an acknowledgement signal from the reader setting a resetable flag in the transponder for an indefinite period;
- utilizing the set flag to inhibit the transponder from responding to the energizing signal, as long as the flag is set; and
- causing the transponder in response to a reset signal, to reset the flag and to revert to an active mode wherein it automatically responds to the energizing signal.

2. A method as claimed in claim 1 wherein the energizing signal is in the form of a high frequency carrier and the acknowledgement signal is in the form of a pulse, amplitude modulated on the carrier.

3. A method as claimed in claim 2 wherein the reset signal is also amplitude modulated on the carrier.

4. A method as claimed in any one of claims 1 to 3 wherein a respective command decoder is utilized by each of the transponders to decode command signals which are amplitude modulated on the energizing signal; and wherein the decoded signals are utilized to select a selectable parameter of transponder operation.

5. An electronic transponder for an electronic identification system also including a reader for reading the transponder, the transponder including:
- control circuitry having first and second modes of operation;
- the first mode being an active mode wherein the transponder automatically responds with identification code data when energized;
- the second mode being a sleep mode wherein the transponder is inhibited from responding when energized;
- a resetable flag connected to mode selection signal detection circuitry;
- the mode selection signal detection circuitry being responsive to an acknowledgement signal from a reader after the transponder has been read to set the flag, thereby to cause the control circuitry to enter the sleep mode; and to a reset signal to reset the flag, thereby to cause the control circuitry to enter the active mode.

6. A transponder as claimed in claim 5 wherein the resetable flag includes a bistable, non-volatile memory cell.

7. A transponder as claimed in claim 5 or claim 6 wherein the mode selection detection circuitry includes a reset signal detector including a low pass filter for filtering out the reset signal which is amplitude modulated on the energizing signal.

8. A transponder as claimed in claim 7 wherein the reset signal detector further includes an amplitude demodulator connected to an input of the low pass filter.

9. A transponder as claimed in claim 8 wherein the demodulator includes an envelope detector and the low pass filter includes an integrator.

10. A transponder as claimed in claim 9 wherein an output of the integrator is connected to a rectifier, to yield a rectified signal having an amplitude which is proportional to an amplitude of a signal at an output of the integrator; and wherein the output of the rectifier is connected to a comparator circuit, for providing an output signal to reset the flag if the amplitude of the rectified signal is in a predetermined relation to a first reference signal supplied to the comparator.

11. A transponder as claimed in claim 10 wherein the integrator has a transfer function with a negative slope of amplitude against increasing frequency; and wherein the comparator provides a second output signal in response to a second input signal having a frequency falling on the slope, if the output signal at the output of the rectifier derived from the second input signal is in a predetermined relation to a second reference signal.

12. An electronic identification system including:
- a reader;
- a plurality of electronic transponders;
- each transponder including control circuitry having first and second modes of operation;
- the first mode being an active mode wherein the transponder responds with identification code data when energized by the reader,
- the second mode being a sleep mode wherein the transponder is inhibited from responding when energized;
- the reader including transmitter means to transmit an acknowledgement signal immediately after a transponder has been read;
- each transponder including respective mode selection signal detection circuitry and a respective resetable flag connected to the mode selection signal detection circuitry;
- the detection circuitry being responsive to the acknowledgement signal to set the flag and to cause the control circuitry to enter the sleep mode; and
- the detection circuitry further being responsive to a reset signal to reset the flag to cause the control circuitry to enter the active mode.

13. An electronic identification system as claimed in claim 12 wherein the acknowledgement signal is in the form of a pulse, which is amplitude modulated on the energizing signal.

14. An electronic identification system as claimed in claim 13 wherein the transmitter of the reader amplitude modulates the reset signal on the energizing signal and wherein the frequency of the reset signal is at least an order lower than the frequency components of the acknowledgement signal and of the energizing signal.

15. Transponder command signal detection circuitry including:
- an integrator having a negative slope of output amplitude with respect to increasing input frequency, so that the amplitude of an output signal is inversely proportional to the frequency thereof;
- rectifier means connected to an output of the integrator to provide a rectified signal having an amplitude proportional to the amplitude of the output signal;
- comparator means connected to the rectifier means to provide a command signal if the amplitude of the rectified signal is in a predetermined relation to a reference signal;
- a resetable flag operable by the command signal; and
- the resetable flag being configured to control an operational parameter of the transponder.
